# EUROPEAN PATENT APPLICATION

(11) **EP 2 055 615 A1**
(43) Date of publication of application: **06.05.2009**
(21) Application number: 07119718.0
(22) Date of filing: 31.10.2007
(51) Int. Cl.: B62D 31/02, B62D 47/02

(54) **Urban transport vehicle with small wheels**

(71) Applicant: Iveco France S.A., 69200 Vénissieux (FR)
(72) Inventor: Desneux, Alexandre, 38460 Chamagnieu (FR)
(74) Representative: Borsano, Corrado

(57) **Abstract**

Said urban transport vehicle, of a bus variety, comprises a body (2) mounted on axles (8₁,8₂,12₁,12₂), each axle having at least two wheels placed either side of the body, said transport vehicle having a total live load of more than 5 tons and an overall length of more than 5.5 metres,
characterised in that the wheels (10₁,10₂,14₁,14₂) of at least one axle have a diameter of between 700 and 750 mm.

## Description

The present invention concerns an urban transport vehicle with small wheels.

The invention is aimed at all types of transport vehicle whose route involves at least one station stop, during which people are likely to board the vehicle, and also to alight from it. It is aimed at such a vehicle, which may or may not be driven in a dedicated lane, in particular by means of electric wires, of rails or even by optical means.

More specifically, the invention is aimed at transport vehicles in the M3 category, according to European Directive 70/156/CEE. In such conditions, said vehicle is likely to carry at least 8 passengers, which may be in a sitting or standing position. The total live load of this kind of vehicle is typically greater than 5 tons, while its overall length is greater than 5.5 metres.

In such conditions, transport vehicles according to this invention include notably, but not exclusively, buses or trolleybuses. This type of vehicle typically includes a chassis mounted on at least one axle, which supports wheels equipped with tyres.

Usually said vehicle body is equipped along its lateral sides with various seats intended for passengers. Said seats may be single, in other words they can hold just one passenger, or multiple, in that they can allow several passengers to sit next to each other.

The aforementioned wheels are connected to wheelhouses, on which some of the seats are placed. Lastly, the rows of seats facing each other delimit a central corridor, which notably allows passengers to move through the vehicle.

This having been specified, the invention aims to propose a transport vehicle that is an improvement on the prior art. It aims specifically to propose such a vehicle which has a simplified structure, with a more modular design of manufacture, and in which passenger comfort and ease of movement are better than in usual solutions.

To this end, it has as its object an urban transport vehicle, of the bus type, comprising a body mounted on axles, each axle being equipped with at least two wheels arranged either side of the body, said transport vehicle having a total live load of more than 5 tons and an overall length of more than 5.5 metres, characterised in that the wheels of at least one axle have a diameter of between 700 and 750 mm.

According to further characteristics of the invention:
- each wheel has a diameter of between 730 and 740 mm, notably of around 737 mm;
- said vehicle comprises at least one wheelhouse, extending above at least one corresponding wheel, said wheelhouse supporting at least one first seat, while at least one other seat is provided for, placed at a distance from said wheelhouse, the first and second seats being situated at roughly the same height;
- said vehicle comprises at least two front axles, as well as at least two rear axles;
- three rear axles are provided, one of said rear axles being separated from the other two rear axles by means of a side door in the vehicle body;
- said vehicle comprises a main vehicle having a body and at least two axles equipped with wheels, as well as at least one trailer, the or each trailer having a body and at least two axles mounted on wheels;
- two wheelhouses opposite each other delimit a central corridor with a width greater than 1000 mm, preferably greater than 1100 mm, specifically in the region of 1200 mm;
- said vehicle has a total live load of more than 9 tons;
- the wheels on all the axles have a diameter of between 700 and 750 mm, preferably between 730 and 740 mm, and even more preferably of around 737 mm;
- the wheels on the front axles have a diameter of between 700 and 750 mm, preferably between 730 and 740 mm, and even more preferably of around 737 mm, while the wheels of at least one rear axle have a diameter much greater than 750 mm, notably in the region of 974 mm.

The invention shall be described below, with reference to the annexed drawings, given purely by way of non-limitative example, in which:
- figure 1 is a top view, illustrating a transport vehicle according to the invention;
- figure 2 is a side view illustrating in greater detail a wheelhouse equipping the transport vehicle according to this invention;
- figure 3 is a top view on a larger scale, illustrating the steering angle of the wheels equipping the vehicle according to this invention;
- figures 4 and 5 are side and top views respectively, similar to figures 2 and 3, illustrating the wheels of a vehicle according to the state of the art; and
- figures 6 to 8 are top views, similar to figure 1, illustrating three embodiments of the transport vehicle according to the invention.

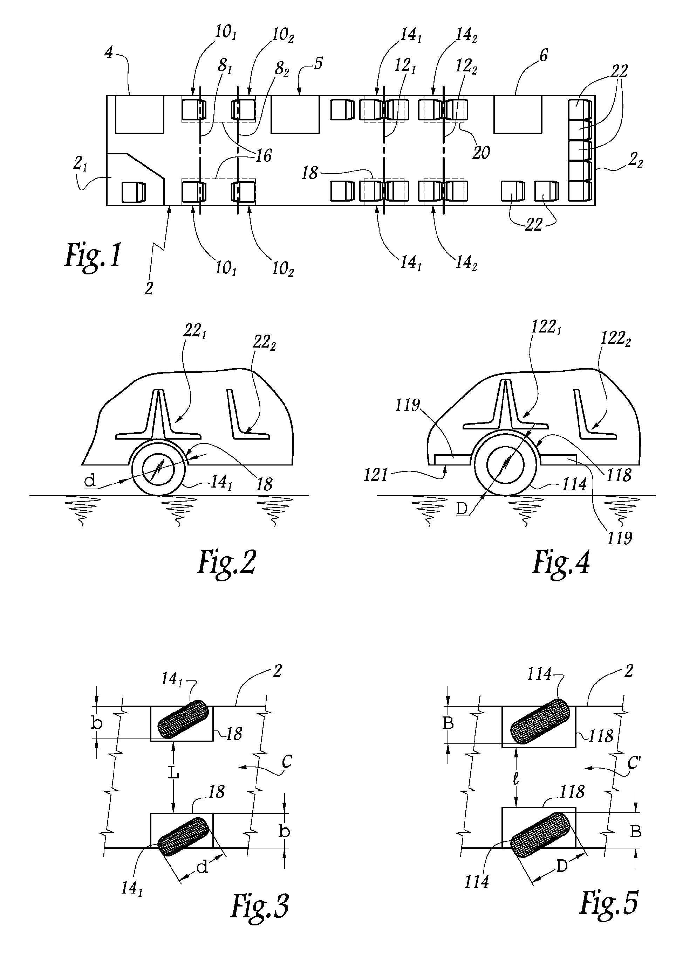

Figure 1 illustrates a transport vehicle according to the invention which comprises a body 2, the front end of which is numbered 2₁, situated on the left of the drawing, while the rear end is numbered 2₂. The body 2 is equipped with three side doors, respectively front 4, middle, 5 and rear 6.

The body 2 is supported by wheels with tyres. More specifically, there are two front axles 8₁ and 8₂, each of which is equipped with two drive wheels, namely a first pair 10₁ and a second pair 10_{2.}

There are also provided two rear axles 12₁ and 12₂, each of which is equipped with two drive wheels, namely a first pair 14₁ and a second pair 14₂. However, as a variation, only one pair of the rear wheels could be drive wheels, specifically pair 14₁. In this case the other pair, for example 14₂, are steered according to a sweeping angle smaller than that of the front wheels 10₁ and 10₂.

Furthermore, the two front wheelhouses are marked 16, extending either side of the body above the axles 8₁ and 8₂. In addition, 18 refers to the two wheelhouses extending above axle 12₁, and 20 refers to the two wheelhouses extending above axle 12₂. Lastly, the transport vehicle according to the invention is equipped with seats 22, of any known type, which may for example be single, double, fixed or folding.

Figure 2 illustrates more precisely two seats 22₁ and 22₂, extending respectively above and close to the wheelhouse 18. According to this invention, all the wheels, of those numbered 14₁, have an external diameter d of between 700 and 750 mm, preferably between 730 and 740 mm and notably in the region of 737 mm. Said diameter d corresponds to a wheel with a tyre that is nominally inflated, i.e. with a pressure for example of around 9 bars with a load of around 2.5 tons per wheel.

Seat 22₁ is arranged over wheelhouse 18, being fixed by any appropriate means. Given that the value d of the diameter of the wheel is relatively low, seat 22₁ placed above wheelhouse 18 extends roughly at the same height as the adjacent seat 22₂, placed at a distance from said wheelhouse. In other words, seat 22₁ placed above the wheelhouse is not raised in relation to the other seats so that, as will become clear below, it is not necessary to modify the arrangement of the floor near said wheelhouse.

Figure 4 illustrates a wheel 114 equipping a vehicle according to the state of the art, of which the diameter D is substantially greater than that d of wheels 10 and 14 used in the invention. Thus, said diameter D is usually around 974 mm.

In such conditions, the wheelhouse 118 extending above said wheel 114 has a height greater than that 18 in figure 2. Similarly, seat 122₁ fixed to this wheelhouse has a height greater than that 122₂ which is placed beside the wheelhouse.

It is therefore necessary to allow for a raised section 119, above the floor 121 of this traditional transport vehicle. The presence of this raised section 119 is explained by the fact that the bottom of the seat 122₁ must not be above a certain height in relation to a bearing surface for the feet, which is defined by said raised section 119.

A further characteristic of the invention is illustrated in figure 3, which is a top view illustrating the steering-angle of the wheels 14₁. Given that they have a relatively small diameter d, the sweeping of these wheels during steering is also quite small. Thus the value of this maximum sweeping distance is marked b, which corresponds to the distance between the edge of the body and the furthest end of the wheel in its position of maximum pivoting. Consequently, it follows that the wheelhouse 18 has a relatively small width.

In such conditions, the two opposite wheelhouses 18 delimit a central corridor C, the width of which is marked L. For the reasons mentioned above, the value of this width L of the corridor is relatively large, specifically in the region of 1200 mm.

This should be compared with the state of the art described with reference to figure 4, in which the steering-angle of the wheels is shown in figure 5. B denotes the maximum sweeping value of the wheels 114, which have a diameter D. Said value B is greater than that b of the invention, so that the width of the wheelhouses 118 is much greater than that of the wheelhouses 18. Therefore, the corridor C' of known vehicles, which is delimited by the wheelhouses, has a width I much lower than that allowed by the invention, and is generally around 900 mm.

From the above descriptions it thus follows that the use of wheels with a smaller diameter is advantageous.

Indeed, it allows the structure of the transport vehicle equipped with such wheels to be simplified. Specifically, it is not necessary to allow for a raised section above the floor, in order to support the feet of those passengers sitting on the seats fixed onto the wheelhouses. Note that this lack of a raised section is also advantageous as regards accessibility for people with reduced mobility.

Moreover, these smaller-sized wheels allow a central corridor to be traced out which is conversely larger in size. This therefore allows passengers to move more easily through the vehicle.

Note that the choice of a wheel diameter of between 700 and 750 mm is an advantageous compromise. Indeed, this value is small enough to guarantee the advantages mentioned above.

Furthermore, this value is large enough for the vehicle not to require too great a number of wheels. In such conditions, the load capacity for the tyres is enough to ensure that an equivalent or even greater number of passengers can be carried compared to that allowed by the prior art.

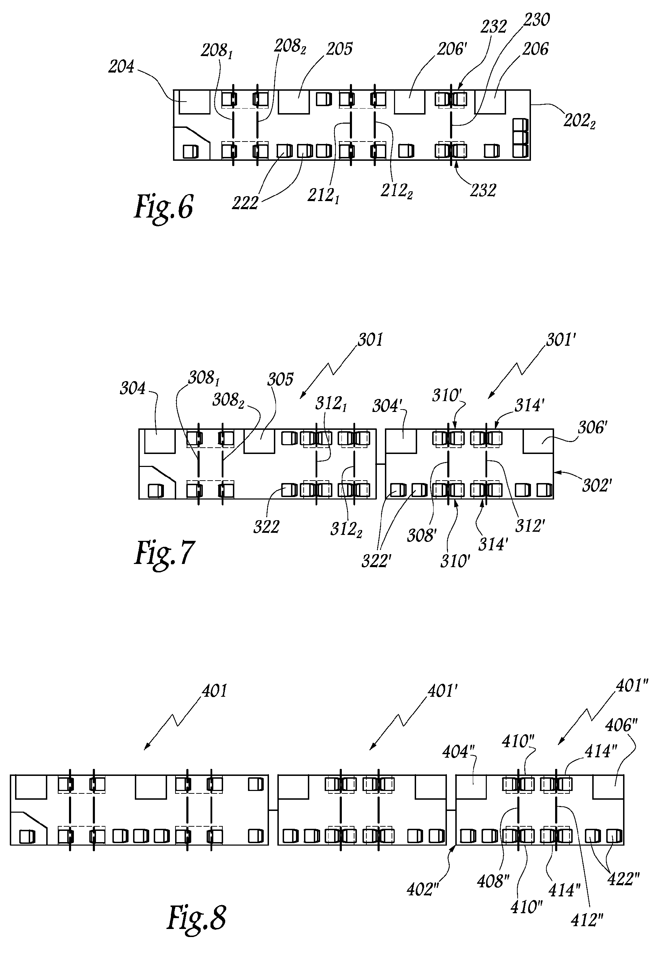

Figure 6 illustrates a first embodiment of the invention. In said figure 6, the mechanical elements analogous to those in figure 1 are given the same reference numbers, increased by 200.

The vehicle in figure 6 differs to that in figure 1 in that it includes a supplementary axle 230 fitted between the drive axle 212₂ and the rear end 202₂ of the body 202. Said axle 230, which is equipped with two wheels 232 which have a diameter that is roughly identical to that of the other wheels, is separated from the two aforementioned axles 212₁ and 212₂ by a supplementary door 206'.

In such conditions, it follows that the total length of the vehicle in this figure 6 is greater than that of the vehicle in figure 1. By way of purely indicative example, the vehicle in figure 1 has a total length of around 12 metres, while that in figure 6 has a total length of around 15 metres.

Figure 7 illustrates a second embodiment of the vehicle according to the invention. In said figure 7, the mechanical elements analogous to those in figure 1 are given the same reference numbers, increased by 300.

The transport vehicle in figure 7 includes first of all a main vehicle, marked 301, which is roughly identical to the transport vehicles in figure 1. It includes, among other things, two front axles 308₁ and 308₂, as well as two rear axles 312₁ and 312₂. It also comprises a front door 304, as well as a central door 305. However, the principal vehicle 301 does not have a rear door.

Said main vehicle 301 is joined to a trailer 301', which is connected to it by any appropriate means. This trailer includes a body 302', as well as two axles respectively front 308', and rear 312', equipped with respective wheels 310' and 314'. This trailer 301' is also equipped with a front door 304' and a rear door 306', as well as with seats 322'.

Note that, of the two axles 308' and 312', one is equipped with drive wheels, while the other is equipped with steering-wheels - the order is indifferent.

Figure 8 illustrates a third embodiment of the invention. In said figure 8, the mechanical elements that are analogous to those in figure 1 are given the same reference numbers, increased by 400.

The transport vehicle in figure 8 comprises, just like that shown in figure 7, a main vehicle 401, as well as a first trailer 401' which are respectively analogous to the main vehicle 301 and the trailer 301'. It is also equipped with a second trailer 401 ", which has a structure that is roughly identical to that of the first trailer 401'. Therefore it comprises notably a body 402", two axles 408" and 412", mounted on wheels 410"and 414", as well as doors respectively at the front 404" and 406", and seats 422". As in the case of the first trailer 401', one of the axles, either front or back, is equipped with drive wheels, while the other axle, front or rear, is equipped with steering wheels.

In the various examples given above, the motorization of the drive wheels is achieved by means of electric engines, each of which is housed in the rim of a corresponding wheel. This solution, which is of a known type, is particularly advantageous in the case of wheels with a small diameter according to this invention. Indeed, this reduction in diameter allows the traction elements, such as the speed box and the electric or thermal engine, to be sized at a lower torque level for the same resultant tractive effort.

Furthermore, note that the use of wheels with a small diameter allows a high level of modularity, with regard to the architecture of the transport vehicle according to this invention. Indeed, it is possible to achieve a vast range of transport vehicles of different lengths, by using these small sized wheels.

The invention is not limited to the examples described and illustrated.

Thus, the vehicle according to the invention may be equipped with only two axles. In such conditions, it has a length of around 6 metres, with a total live load of around 10 tons.

What is more, the invention can be applied to vehicles which have more than eight axles. Thus, the vehicle according to the invention may have twelve axles. In this case, it could comprise a main vehicle and two trailers, each of which is around 12 metres long, or a main vehicle and five trailers, each of which would have a length of around 6 metres.

When an axle has steering wheels, there must necessarily be two of these, on either side of the axle. On the other hand, in the case of non-steering wheels, a single axle may be equipped with four wheels, divided into pairs on either side of said axle.

In the various examples described and illustrated, all of the vehicle's wheels are of a small diameter, of between 700 and 750 mm. However, as an embodiment that is not illustrated, it could be possible for some of the non-steering wheels placed to the rear of the vehicle to have greater dimensions, closer to those usually employed in the prior art. In this case, these large rear wheels are for example placed beneath a bench seat, equipping vehicles of a length greater than 9 metres.

## Claims

1. Urban transport vehicle of the bus type, comprising a body (2 ; 202 ; 302, 302' ; 402, 402', 402") mounted on axles (8₁, 8₂, 12₁, 12₂ ; 208₁, 208₂, 212₁, 212₂, 230 ; 308₁, 308₂, 312₁, 312₂, 308', 310' ; 408₁, 408₂, 412₁, 412₂, 408', 412', 408", 412"), each axle having at least two wheels placed either side of the body, said transport vehicle having a total live load of more than 5 tons and an overall length of more than 5.5 metres,
**characterised in that** the wheels (10₁, 10₂, 14₁, 14₂ ; 210₁, 210₂, 214₁, 214₂, 232 ; 310₁, 310₂, 314₁, 314₂, 310', 314' ; 410₁, 410₂, 414₁, 414₂, 410', 414', 410", 414") of at least one axle have a diameter of between 700 and 750 mm.

2. Vehicle according to claim 1, **characterised in that** each wheel has a diameter (d) of between 730 and 740 mm, notably of around 737 mm;

3. Vehicle according to claims 1 or 2, **characterised in that** said vehicle comprises at least one wheelhouse (16, 18, 20), extending above at least one corresponding wheel, said wheelhouse supporting at least one initial seat(22₁), while at least one other seat (22₂) is provided for, placed at a distance from said wheelhouse, the first and second seats being situated at roughly the same height.

4. Vehicle according to any of the previous claims, **characterised in that** said vehicle comprises at least two front axles (8₁, 8₂ ; 208₁, 208₂), as well as at least two rear axles (12₁, 12₂ ; 212₁, 212₂, 230).

5. Vehicle according to claim 4, **characterised in that** it comprises three rear axles (212₁, 212₂, 230), one (230) of said rear axles being separated from the two other rear axles (212₁, 212₂) by means of a side door (206') in the vehicle body (202).

6. Vehicle according to any of the previous claims, **characterised in that** said vehicle comprises a main vehicle (301 ; 401) having a body (302 ; 402) and at least two axles (308₁, 308₂, 312₁, 312₂ ; 408₁, 408₂, 412₁, 412₂) equipped with wheels (310₁, 310₂, 314₁, 314₂ ; 410₁, 410₂, 414₁, 414₂), as well as at least one trailer (301' ; 401', 401 ", the or each trailer having a body (302' ; 402', 402"), and at least two axles (308', 312' ; 408', 412', 408", 412") mounted on wheels (310', 314' ; 410' ; 414', 410", 414").

7. Vehicle according to any of claims 3 to 6, **characterised in that** the two wheelhouses opposite each other (18) define a central corridor (C) with a width (L) greater than 1000 mm, preferably greater than 1100 mm, specifically in the region of 1200 mm;

8. Vehicle according to any of the previous claims, **characterised in that** said vehicle has a total live load of more than 9 tons.

9. Vehicle according to any of the previous claims, **characterised in that** the wheels of all the axles have a diameter of between 700 and 750 mm, preferably between 730 and 740 mm, and even more preferably of around 737 mm.

10. Vehicle according to any of claims 1 to 8, **characterised in that** the wheels on the front axles have a diameter of between 700 and 750 mm, preferably between 730 and 740 mm, and even more preferably of around 737 mm, while the wheels of at least one rear axle have a diameter much greater than 750 mm, notably in the region of 974 mm
